(19) Europäisches Patentamt
European Patent Office
Office européen des brevets

(11) **EP 4 714 765 A1**

(12) **DEMANDE DE BREVET EUROPEEN**

(43) Date de publication:
**25.03.2026 Bulletin 2026/13**

(21) Numéro de dépôt: **25200662.2**

(22) Date de dépôt: **05.09.2025**

(51) Classification Internationale des Brevets (IPC):
**B60T 17/22** (2006.01)     **F16D 66/00** (2006.01)

(52) Classification Coopérative des Brevets (CPC):
**B60T 17/22;** B60T 2270/406; F16D 2065/783;
F16D 2066/001

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **20.09.2024 FR 2410084**

(71) Demandeur: **Renault s.a.s**
**92100 Boulogne Billancourt (FR)**

(72) Inventeur: **AUMAN, REMI**
**91978 LES ULIS (FR)**

(54) **MÉTHODE D' ESTIMATION DE TEMPÉRATURE D'UN DISQUE DE FREIN EMBARQUÉ DANS UN VÉHICULE**

(57)     L'invention concerne une méthode, mise en œuvre par ordinateur, d'estimation de la température, à un instant t, d'un disque de frein embarqué dans un véhicule et associé à une roue, le véhicule comprenant N roues et N disques de frein, N étant un entier naturel supérieur ou égal à 1, ladite méthode comprenant les étapes suivantes :
- Calcul (étape 100) d'un échauffement théorique du disque à l'instant t ;
- Calcul (étape 200) du refroidissement du disque à l'instant t ;
- Calcul (étape 300) de la température du disque à l'instant t.

L'invention couvre aussi une méthode, mise en œuvre par ordinateur, de contrôle préventif d'un véhicule incluant la réalisation des étapes de la méthode d'estimation de la température.

FIGURE 1

EP 4 714 765 A1

**Description**

La présente invention se rapporte au domaine de la mécanique et notamment celui de l'automobile, et concerne plus précisément une méthode d'estimation de la température d'un disque de frein embarqué dans un véhicule.

Lors du freinage, les plaquettes de frein sont pressées contre le disque de frein. Le frottement ainsi provoqué échauffe le disque de frein par conversion en chaleur de l'énergie cinétique créée lors du freinage.

Une des causes d'usure des disques de frein est la surchauffe. La structure d'un disque de frein standard, typiquement en acier, commence à se modifier lorsqu'une température de disque d'environ 650°C est atteinte. Cette température est facilement dépassée si le conducteur freine trop brusquement de manière répétée et sans laisser refroidir les disques. L'estimation de la température d'un disque de frein s'avère capitale pour s'assurer du bon état du système de freinage.

Dans la phase d'étude et conception d'un nouveau véhicule, il est nécessaire de figer une définition technique des différents organes, tels que les organes de frein, en fonction de la destination du véhicule. Ainsi, les concepteurs doivent être en mesure de pouvoir tester rapidement diverses configurations de systèmes de freinage et de refroidissement des disques de frein afin de s'assurer du bon dimensionnement de l'organe de frein.

Jusqu'à présent, il était commun de se baser sur les retours d'expériences issus d'anciens projets véhicules pour adapter les organes de frein pour de nouveaux véhicules. Or, avec l'apparition de chaîne de traction électrique ou hybride, l'architecture du véhicule a changé, la masse embarquée peut être différente, et les adaptations opérées jusqu'alors ne suffisent plus pour garantir le bon dimensionnement des disques de frein. En outre, les solutions de l'art antérieur ne permettent pas de discriminer rapidement deux propositions d'organe de frein entre elles.

Une autre solution d'estimation de la température d'un disque de frein est offerte par des capteurs de température. Cependant, l'instrumentalisation d'un véhicule avec de tels capteurs est complexe : il faut percer les disques de frein pour pouvoir immerger les capteurs au cœur des disques et prévoir des collecteurs tournants sur les roues.

L'invention s'inscrit dans ce contexte et vise à pallier tout ou partie des problèmes cités plus haut en proposant une méthode d'estimation de la température d'un disque de frein embarqué dans un véhicule pouvant être utilisée en phase amont pour permettre le bon dimensionnement du disque en termes de volume et d'aérothermie, mais aussi en phase d'utilisation véhicule pour mener des actions préventives en cas de besoin.

A cet effet, l'invention concerne une méthode, mise en œuvre par ordinateur, d'estimation de la température, à un instant t, d'un disque de frein embarqué dans un véhicule et associé à une roue, le véhicule comprenant N roues et N disques de frein, N étant un entier naturel supérieur ou égal à 1, ladite méthode comprenant les étapes suivantes :

- Calcul d'un échauffement théorique du disque à l'instant t ;

- Calcul du refroidissement du disque à l'instant t ;

- Calcul de la température du disque à l'instant t.

Grâce à ces caractéristiques, la température du disque de frein embarqué dans un véhicule peut être estimée en temps réel au moyen d'un bilan d'énergie thermique se basant sur les quantités d'énergie reçues et libérées par le disque de frein, à travers les données d'échauffement du disque et de refroidissement du disque. Il en résulte une estimation rapide et précise de cette température.

La méthode d'estimation de l'invention utilise des données fonctionnelles simples et accessibles aux équipes de mise au point du véhicule. En outre, étant simple d'utilisation, elle permet d'offrir une solution logicielle pour embarquer un estimateur de température des disques de frein dans le véhicule.

Selon une caractéristique optionnelle de l'invention, l'étape de calcul d'un échauffement théorique du disque comprend les sous-étapes suivantes :

- Calcul de l'énergie cinétique à dissiper à l'instant t sur les N disques de frein;

- Calcul de l'énergie cinétique à dissiper pour chacun des N disques de frein à l'instant t ;

- Calcul de l'élévation de température pour chacun des N disques de frein à l'instant t.

L'échauffement théorique est ainsi calculé sur la base de l'énergie cinétique totale à dissiper par freinage. Puis cette énergie cinétique totale est répartie sur chaque roue pour déterminer l'élévation de température associée à cette dissipation d'énergie cinétique.

Selon une caractéristique optionnelle de l'invention, la sous-étape de calcul de l'énergie cinétique à dissiper pour chacun des N disques de frein à l'instant t est réalisée en fonction de la répartition des puissances de freinage sur ledit disque de frein à l'instant t.

L'énergie cinétique totale à dissiper n'est généralement pas répartie de manière égale sur les quatre roues. Elle est distribuée auprès de chaque disque en fonction de la répartition de la puissance de freinage. La puissance de freinage pouvant varier selon les roues, il en résulte une détermination précise de l'échauffement théorique pour chaque disque.

Selon une caractéristique optionnelle de l'invention, la sous-étape de calcul de l'élévation de température pour chacun des N disques de frein à l'instant t est réalisée au moyen d'une variable représentative du freinage opéré par le disque de frein.

Grâce à cette sous-étape, on prend en compte le fait que l'élévation de température du disque est causée par le freinage réel opéré au niveau du disque. Cette sous-étape écarte donc la décélération du véhicule causée par le freinage régénératif qui ne fait pas intervenir le disque de frein ainsi que la décélération causée par le parcours emprunté par le véhicule (comme c'est le cas dans une montée).

Selon une caractéristique optionnelle de l'invention, l'étape de calcul du refroidissement du disque à l'instant t comprend au préalable une étape de détermination d'une constante de refroidissement propre au véhicule et fonction de la vitesse du véhicule à l'instant t.

Connaissant la constante de refroidissement à une pluralité de vitesses données pour un véhicule, il est possible de calculer le refroidissement du véhicule à différents instants.

L'invention porte aussi sur un véhicule comprenant N roues et N disques de frein, N étant un entier naturel supérieur ou égal à 1, chacun des N disques de frein étant associé à une des N roues, et un processeur configuré pour mettre en œuvre la méthode d'estimation de la température d'un disque de frein.

L'invention couvre aussi une méthode, mise en œuvre par ordinateur, de contrôle préventif d'un tel véhicule, la méthode comprenant les étapes suivantes :

- Fourniture d'une température maximale de consigne d'un des N disques de frein ;

- Estimation de la température dudit disque de frein par mise en œuvre de la méthode d'estimation de la température décrite précédemment ;

- Si la température du disque calculée à l'instant t est supérieure à la température maximale de consigne : réalisation d'une action préventive.

Bien entendu, le processeur du véhicule peut être configuré pour mettre en œuvre la méthode de contrôle préventif.

L'action préventive peut être une ou plusieurs parmi :

- Pilotage de l'ouverture d'un déflecteur pour le disque de frein ;

- Désactivation d'une fonction auxiliaire, notamment le programme de stabilité électronique ;

- Envoi d'un signal au conducteur du véhicule ;

- Enregistrement de la température du disque et de l'instant t auquel la température maximale de consigne a été atteinte.

Une telle méthode de contrôle permet d'optimiser l'utilisation du freinage et augmenter la durée de vie des disques de frein. Elle permet aussi de fournir des données à analyser pour permettre une meilleure utilisation des freins.

L'invention porte aussi sur un programme d'ordinateur comportant des instructions pour l'exécution de la méthode d'estimation de la température d'un disque de frein et/ou de la méthode de contrôle préventif du véhicule, lorsque le programme est exécuté par un processeur.

L'invention porte également sur un support d'enregistrement lisible par un processeur sur lequel est enregistré un programme comportant des instructions pour l'exécution de la méthode d'estimation de la température d'un disque de frein et/ou de la méthode de contrôle préventif du véhicule, lorsque le programme est exécuté par un processeur.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[fig 1] représente schématiquement les principales étapes de la méthode d'estimation de la température d'un disque de frein embarqué dans un véhicule selon l'invention,

[fig 2] représente l'évolution temporelle de la température des disques avant d'un véhicule lors d'une phase de refroidissement des disques, mesurée et estimée selon l'invention,

[fig 3] représente l'évolution temporelle de la température d'un disque avant d'un véhicule lors d'un cycle de roulage, mesurée, estimée selon la méthode de l'invention et disponible sur le CAN du véhicule,

[fig 4] représente schématiquement une roue avec un rayon de développement et un rayon sous charge.

Les caractéristiques, variantes et les différentes formes de réalisation de l'invention, telles qu'elles ont été décrites ou telles qu'elles vont être présentées dans la description détaillée qui va suivre, peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Par souci de clarté, les mêmes éléments sont désignés par les mêmes références aux différentes figures.

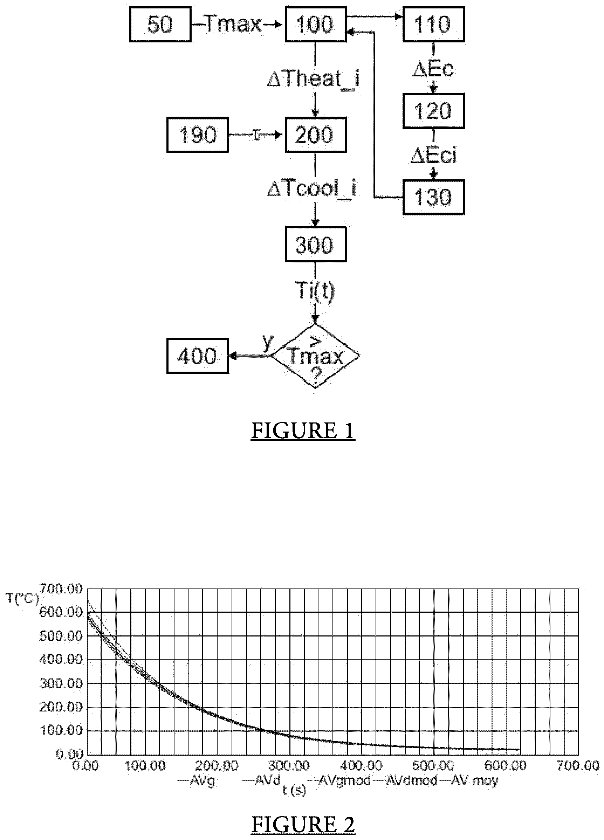

La figure 1 représente schématiquement les principales étapes de la méthode d'estimation de la température d'un disque de frein embarqué dans un véhicule selon l'invention. Cette méthode est mise en œuvre par ordinateur et permet d'estimer la température Ti(t), à un instant t, d'un disque de frein Di embarqué dans un véhicule et associé à une roue. Le véhicule comprend N roues et N disques de frein (N étant un entier naturel supérieur ou égal à 1). Dans ce qui suit, l'invention sera décrite de manière non-limitative avec N = 4, c'est-à-dire pour un véhicule ayant quatre roues (traditionnellement deux roues avant et deux roues arrière). A chacune des roues est associé un disque de frein. Dans notre exemple, le véhicule comprend donc quatre disques de frein (deux disques avant et deux disques arrière).

Selon l'invention, la méthode comprend une première étape 100 de calcul d'un échauffement théorique $\Delta T_{heat\_i}$ du disque Di à l'instant t, une deuxième étape 200 de calcul du refroidissement $\Delta T_{cool\_i}$ du disque Di à l'instant t, et une troisième étape 300 de calcul de la température Ti(t) du disque Di à l'instant t.

Sur la figure 1, les étapes 100, 200 apparaissent successivement, cependant, comme cela apparaîtra à la lecture de leur description, ces deux étapes peuvent être réalisées dans un ordre différent ou simultanément.

La méthode d'estimation de la température d'un disque de frein embarqué dans un véhicule se base sur un bilan d'énergie thermique en prenant en compte l'échauffement du disque et le refroidissement du disque. Ces calculs vont être détaillés ci-dessous.

L'étape 100 de calcul d'un échauffement théorique $\Delta T_{heat\_i}$ du disque Di comprend plusieurs sous-étapes. Tout d'abord, on procède à la sous-étape 110 de calcul de l'énergie cinétique $\Delta Ec$ à dissiper à l'instant t sur les N disques de frein :

$$\Delta Ec = \frac{1}{2} M (V_1^2 - V_0^2)$$

Avec M la masse du véhicule, et V la vitesse linéaire du véhicule (l'indice 0 représentant l'instant t et l'indice 1 représentant l'instant suivant, aussi noté t+dt). Autrement dit, l'énergie cinétique à dissiper à l'instant t correspond à l'énergie cinétique associée à la variation de vitesse entre la vitesse à l'instant t et la vitesse à laquelle on souhaite amener le véhicule à l'instant suivant, c'est-à-dire à la variation de vitesse obtenue entre t et t+dt par le freinage du véhicule.

En considérant une décélération *a* constante sur toute la plage temporelle entre t et t+dt, on a : $V_1 = V_0 + a.dt$. S'agissant de freinage, la valeur de *a* est négative.

Donc :

$$V_1{}^2 = (V_0 + a.dt)^2 = V_0{}^2 + (a.dt)^2 + 2.V_0.a.dt$$

soit

$$V_1{}^2 - V_0{}^2 = 2.V_0.a.dt + (a.dt)^2$$

Il vient alors :

$$\Delta Ec = \frac{1}{2} M \left(2.V_0.a.dt + (a.dt)^2\right) \qquad (Equation\ 1)$$

La valeur $\Delta Ec$ représente l'énergie cinétique à dissiper à l'instant t sur les 4 disques de frein du véhicule. La variation d'énergie cinétique est représentée en fonction de l'état du véhicule courant par sa vitesse et sa décélération.

Connaissant l'énergie cinétique à dissiper à l'instant t sur les 4 disques de frein du véhicule, il faut maintenant calculer l'énergie cinétique à dissiper sur chaque disque de frein. Il s'agit de la sous-étape 120 de calcul de l'énergie cinétique $\Delta Eci$ à dissiper pour chacun des N disques de frein à l'instant t. La sous-étape 120 de calcul de l'énergie cinétique $\Delta Eci$ à dissiper pour chacun des N disques de frein à l'instant t est réalisée en fonction de la répartition des puissances de freinage sur le disque de frein à l'instant t.

Pour chaque roue, on calcule le rapport

$$\alpha_i = \frac{P_i.w_i.C_i^*}{\sum_{i=1}^{4} P_i.w_i.C_i^*} \qquad (Equation\ 2)$$

Ce rapport est l'image de la répartition des puissances de freinage sur le disque Di à l'instant t, avec :

i : indice de roue 1 à 4,
$P_i$: pression hydraulique de freinage qui arrive sur l'étrier de frein sur la roue i (Pa),
$w_i$: vitesse de rotation de la roue i (rad/s),
$C_i^*$ : efficacité du frein de la roue i (N.m/Pa).

Ainsi, si une roue est bloquée ($w_i$ = 0) ou sans pression hydraulique de freinage ($P_i$ = 0), ou bien si on a une régulation de pression différenciée entre la roue droite et la roue gauche, ce rapport permet de différencier l'énergie à dissiper sur chaque roue. En fonctionnement nominal, le rapport vaut la distribution de freinage.

On obtient pour chaque roue, c'est-à-dire pour chaque disque de frein, une énergie à dissiper de :

$$\Delta Ec_i = \alpha_i.\Delta Ec \qquad (Equation\ 3)$$

Sur la base de l'énergie cinétique à dissiper pour chaque disque de frein, la sous-étape 130 permet le calcul de l'élévation de température $\Delta Theat\_i$ pour chacun des 4 disques de frein à l'instant t. Cette élévation de température est reliée aux paramètres intrinsèques au disque de frein selon l'équation suivante :

$$\Delta T_{heat\_i} = \frac{\Delta Ec_i}{Cp_i(T_i) * m_i} \qquad (Equation\ 4)$$

avec :

- $\Delta T_{heat\_i}$ la variation de température du disque de frein de la roue $i$ correspondant à l'échauffement
- $Cp_i(T_i)$ la capacité thermique massique de la piste de disque de frein de la roue i, exprimée en kJ/(kg.K), qui dépend de la température $T_i$ du disque de la roue $i$,
- $m_i$ la masse de la piste du disque de la roue $i$ en kg.

Par piste du disque, on entend l'anneau extérieur sur lequel est réalisé le contact entre le disque et la plaquette de frein.

Par la suite, il est nécessaire de calculer une décélération théorique $a_{th}$ du véhicule en fonction de la pression hydraulique de freinage. En effet, la décélération a provient de l'état global du véhicule. Cette décélération peut être due à du freinage régénératif ou à la pente rencontrée sur le parcours du véhicule. Dans ces cas, on perçoit une décélération a mais le disque de frein n'est pas nécessairement utilisé. Il faut donc calculer une décélération théorique provenant uniquement du système de freinage pour être au plus près de ce que fait le frein et de l'échauffement subi par le disque de frein.

Ainsi, on procède à la sous-étape 130 de calcul de l'élévation de température $\Delta T_{heat\_i}$ pour chacun des N disques de frein à l'instant t réalisée au moyen de la variable $a_{th}$ représentative du freinage opéré par le disque de frein.

Pour cela, on considère que les forces entrant en jeu sont uniquement les forces de freinage, en négligeant les forces de frottement et les forces aérodynamiques.

$$\Sigma Forces \ = \ M.a_{th}$$

Par conséquent :

$$\sum\nolimits_{i=1}^{4} ForceFrein \ = \ M.a_{th}$$

avec :

$$ForceFrein = \frac{Couple \ Frein}{Rsc}$$

et

$$Couple \ Frein \ = \ C^{*}.P$$

avec $C^{*}$ l'efficacité du frein et $P$ la pression hydraulique.
*Rsc* est le rayon sous charge de la roue.
On a donc :

$$\sum\nolimits_{i=1}^{4} \frac{C_i^{*}.P_i}{Rsc_i} \ = \ M.a_{th}$$

On multiplie de part et d'autre par la vitesse du véhicule pour ne plus raisonner en force mais en puissance. La vitesse du véhicule peut être approximée pour chaque roue par

$$V \ = \ w_i.Rd_i$$

avec :
$w_i$ la vitesse de rotation de la roue, et $Rd_i$ son rayon de développement.

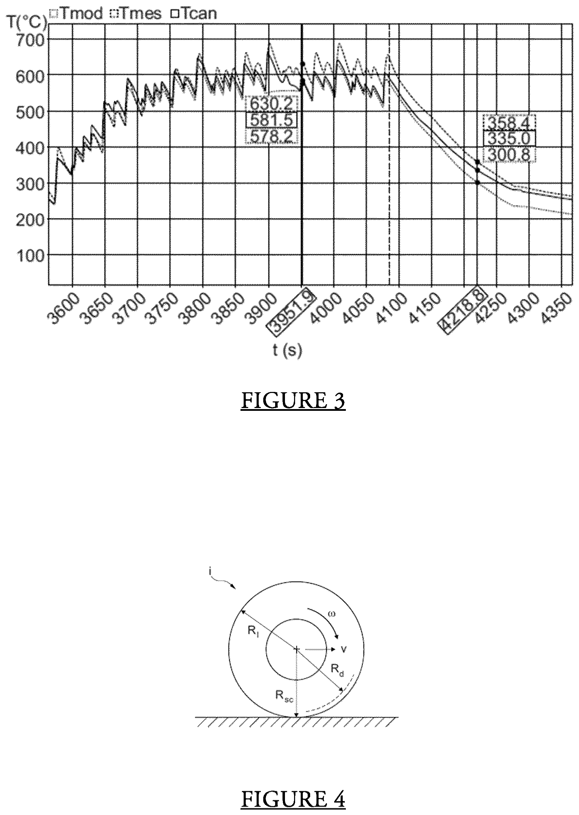

La figure 4 représente schématiquement une roue i avec un rayon de développement $R_d$ et un rayon sous charge $R_{sc}$.
Le rayon de développement (noté $R_d$) est un rayon qui lie la vitesse de rotation à sa vitesse linéaire, celui-ci correspond donc à la distance en mètres que le véhicule a parcouru lorsqu'un tour de roue est effectué ; et le rayon sous charge (noté $R_{sc}$) est le rayon de la roue s'étendant depuis son centre jusqu'au point du pneu en contact avec le sol.
On obtient :

$$\sum\nolimits_{i=1}^{4} \frac{C_i^{*}.P_i.w_i.Rd_i}{Rsc_i} \ = \ M.V.a_{th}$$

Pour simplifier, on fait l'hypothèse que $Rd_i \simeq Rsc_i$, ce qui donne :

$$\sum\nolimits_{i=1}^{4} C_i^{*}.P_i.w_i \ = \ M.V.a_{th}$$

Et par conséquent :

$$a_{th} = \frac{1}{M.V}\sum\nolimits_{i=1}^{4} C_i^{*}.P_i.w_i \qquad (Equation \ 5)$$

L'hypothèse sur les rayons faite ci-dessus a été vérifiée sur différents véhicules dans différentes conditions de roulage et se révèle juste avec un rapport $\frac{Rsc}{Rd}$ autour de 95% à 97%.

On remplace ensuite *a* par $a_{th}$ dans le calcul de variation d'énergie cinétique (Equation 1), et on obtient à partir des équations (1) à (5) l'échauffement théorique $\Delta T_{heat\_i}$ du disque *i* :

$$\Delta T_{heat\_i} = \frac{P_i . w_i . C_i^*}{V_0} . \frac{2 . V_0 . dt + a_{th} . dt^2}{2 . Cp_i(T_i) * m_i} \qquad \text{(Equation 6)}$$

Les avantages de l'équation 6 sont qu'en cas de freinage régénératif, la pression $P_i$ est nulle, donc l'équation 6 reste identique pour un freinage conventionnel et pour un freinage régénératif. Autrement dit, grâce à ces sous-étapes de calcul, la décélération du véhicule obtenue par le freinage régénératif et/ou par le relief du parcours est écartée de l'estimation. On prend uniquement en compte la composante de décélération obtenue par le biais du freinage au niveau des disques de frein. C'est bien l'échauffement réellement subi par chaque disque qui est calculé. En cas d'interventions freins autres (telles que l'anti-patinage, le torque vectoring freins) ou de régulation ESP (Electronic Stability Program en anglais, ou programme électronique de stabilité), on prend également en compte l'effet dissipatif sur chaque frein.

Enfin, si le conducteur freine mais que le véhicule accélère (par exemple pour un véhicule en descente), le calcul se base bien sur une décélération théorique reconstruite à partir des pressions des freins. Il en résulte un calcul plus précis.

La méthode d'estimation de l'invention comprend une deuxième étape 200 de calcul du refroidissement $\Delta$Tcool_i du disque Di à l'instant t. Cette étape consiste à calculer le refroidissement qui s'exerce sur chacune des roues au niveau du disque de frein. Pour ce faire, la méthode des constantes de refroidissement de Newton avec $\tau$ la constante de refroidissement est utilisée :

$$\frac{dT}{dt} = -\frac{T_0 - T_{ext}}{\tau}$$

avec $T_{ext}$ la température extérieure et $T_0$ la température initiale du disque.

Avec une constante de refroidissement $\tau$ positive, on a :

$$T = (T_0 - T_{ext}) . e^{-t/\tau} + T_{ext}$$

On a alors la loi de variation de la température, ce qui donne pour chaque disque de frein le refroidissement suivant :

$$\Delta T_{cool\_i} = -\frac{T_0 - T_{ext}}{\tau} . dt \qquad \text{(Equation 7)}$$

Il faut déterminer la constante de refroidissement $\tau$. Cette constante de refroidissement $\tau$ est propre à chaque véhicule et est une fonction de la vitesse du véhicule.

Cette constante de refroidissement est une donnée intrinsèque au véhicule et dépend de nombreux paramètres, notamment aérodynamiques (par exemple disques ventilés ou non, taux d'ouverture de la jante, environnement aérodynamique, flux d'air disponible, etc.).

Cette constante de refroidissement varie en fonction de la vitesse du véhicule. En d'autres termes, chaque véhicule dispose d'une constante de refroidissement pour une vitesse donnée. Si nous étudions cinq véhicules différents à une vitesse de 100 km/h, nous disposerons de cinq constantes de refroidissement. Si nous étudions cinq véhicules différents, chacun à une vitesse de 100km/h et 150km/h, nous disposerons de deux ensembles de cinq constantes de refroidissement, soit dix constantes de refroidissement.

La constante de refroidissement est obtenue en traçant des courbes de refroidissement, issues de mesures expérimentales sur un véhicule instrumenté ou par simulation.

Pour des mesures sur un véhicule instrumenté, on porte le disque à une température proche de ses limites de fonctionnement, puis le véhicule roule à vitesse constante et on mesure la diminution de température (les essais sont à faire pour chaque point de vitesse souhaité).

Pour des mesures par simulation, des modèles de refroidissement appliqués sur une modélisation de disques dans des conditions analogues (température initiale, entrées d'air équivalentes et calcul du refroidissement pour plusieurs vitesses) permettent d'obtenir les courbes de refroidissement.

Dans les deux cas, nous obtenons une référence de l'évolution de la constante de refroidissement $\tau$ en fonction de la vitesse véhicule.

Ainsi, l'étape 200 de calcul du refroidissement $\Delta T_{cool\_i}$ du disque Di à l'instant t comprend au préalable une étape 190 de détermination de la constante de refroidissement $\tau$ propre au véhicule et fonction de la vitesse du véhicule à l'instant t. Cette détermination est illustrée sur la base de la figure 2. Comme cela sera expliqué par la suite, cette étape est réalisée une fois au préalable pour le véhicule considéré et pour chaque vitesse d'intérêt.

La figure 2 représente l'évolution temporelle de la température des disques avant d'un véhicule pour une vitesse de 150 km/h lors d'une phase de refroidissement des disques, mesurée et estimée selon l'invention. Comme évoqué précédemment, cette constante peut être déterminée de manière expérimentale ou sur la base de simulation numérique. Dans le cas de la détermination expérimentale détaillée ici, une série de mesures de la température des disques est réalisée sur le véhicule d'intérêt à la vitesse choisie. Sur la figure 2, on voit que cette mesure a été réalisée sur le disque avant gauche (AVg) et sur le disque avant droit (AVd). Pour la vitesse considérée (ici 150 km/h), on connait la température initiale T0, la température extérieure Text, et la série de mesures fournit l'évolution temporelle de la température du disque. On peut ainsi identifier la constante de refroidissement pour le disque avant droit et le disque avant gauche pour ce véhicule à 150 km/h. Sur la figure 2, les données issues de la simulation ont été ajoutées (AVgmod et AVdmod pour l'évolution temporelle de la température du disque avant gauche et disque avant droit issue de la simulation), et AVmoy représente l'évolution temporelle moyenne de la température mesurée sur le disque avant gauche et le disque avant droit.

L'exemple illustré à la figure 2 concerne les disques de frein avant. Bien entendu, la même procédure est à réaliser pour les disques de frein arrière pour avoir le refroidissement de chacun des quatre disques de frein.

Cette procédure peut être renouvelée à d'autres vitesses pour le même véhicule, pour les disques de frein avant et arrière. On obtient ainsi, pour un véhicule donné, la constante de refroidissement pour chaque vitesse étudiée.

L'étape 190 de détermination de la constante de refroidissement $\tau$ consiste ainsi à analyser la décroissance thermique au niveau du disque de frein en fonction du temps. Cette étape 190 est réalisée en amont de la méthode d'estimation. Elle est réalisée une seule fois pour une vitesse donnée pour le véhicule considéré.

La courbe de refroidissement ayant une allure d'exponentielle inverse, la méthode de l'invention peut utiliser une loi expérimentale de forme $\tau = f(V)$ avec

$$\tau = A \cdot V^{-1/n} \qquad \text{(Equation 8)}$$

où *n* est un nombre compris entre 0,5 et 0,65. A est une valeur propre au véhicule dépendant de l'intégration du disque de frein (taille du disque, géométrie, porosité de roue, implantation de l'étrier, arrosage en air...), et peut être déterminée par une série de mesures de refroidissement comme évoqué précédemment, ou bien calculée par des logiciels de simulation d'aérothermie en suivant le même protocole d'essai.

Avantageusement, *n* est le nombre d'or : $n = (1 + \sqrt{5})/2$, soit $\frac{1}{n} \cong 0.6$. L'utilisation de cette loi expérimentale a montré de très bons résultats d'estimation du refroidissement comparé au refroidissement mesuré.

On comprend ainsi que l'étape 190 de détermination de la constante de refroidissement $\tau$ propre au véhicule et fonction de la vitesse du véhicule à l'instant t peut aussi être réalisée par l'équation 8.

Enfin, la méthode d'estimation de la température de l'invention comprend l'étape 300 de détermination la température Ti(t) du disque Di à l'instant t.

Pour estimer la température du disque Di, partant d'une température initiale correspondant à la température extérieure, la méthode d'estimation selon l'invention consiste à calculer une nouvelle température pour chaque disque *i* à chaque pas de temps selon l'équation :

$$T_i(t) = T_i(t-1) + \Delta T_{heat\_i} + \Delta T_{cool\_i}$$

avec $T_i(t)$ la température du disque *i* à l'instant *t*, $\Delta T_{heat\_i}$ l'échauffement théorique du disque *i* calculé à l'étape 100, $\Delta T_{cool\_i}$ le refroidissement du disque Di à l'instant t calculé à l'étape 200.

Pour résumer, les données d'entrée nécessitées dans la méthode d'estimation de la température des disques sont les suivantes :

- la masse M du véhicule : par exemple une masse moyenne, ou une masse dynamique,

- la vitesse V du véhicule,

- *dt* le pas de temps de calcul entre deux instants considérés,

- $P_i$ la pression hydraulique qui arrive sur l'étrier de frein de la roue i,

- $C_i^*$ l'efficacité des freins,

- $W_i$ la vitesse de rotation des roues

- $Cp_i(T)$ la capacité thermique massique des freins,

- $m_i$ la masse de la piste du disque *i*,

- *Text* la température extérieure,

- $\tau$ la constante de refroidissement pour la vitesse V.

La méthode d'estimation de l'invention présente l'avantage de pouvoir être mise en œuvre simplement et à partir de paramètres physiques connus, disponibles et maîtrisés pour une estimation précise de la température de chaque disque comme cela apparaîtra à la description de la figure 3.

La figure 3 représente l'évolution temporelle de la température d'un disque avant d'un véhicule lors d'un cycle de roulage, mesurée, estimée selon la méthode de l'invention et disponible sur le CAN du véhicule. CAN est l'abréviation de Controller Area Network et correspond à un bus de données par lequel transitent de nombreuses informations du véhicule. Lors de ce cycle de roulage, le véhicule roule dans des conditions de course sur circuit. La température mesurée (référencée Tmes) est mesurée par un capteur dédié. La température Tmod correspond à la température obtenue par la méthode d'estimation de la température selon l'invention. La courbe référencée Tcan est celle fournie sur le CAN du véhicule par le fournisseur ESP (abréviation de Electronic Stability Program pour programme de stabilité électronique).

Lors de ce cycle, le véhicule évolue à une vitesse variable et procède à des séquences de freinage ponctuel. Le trait vertical en pointillés (entre 4050 et 4100 secondes) schématise la mise à l'arrêt du véhicule.

On constate que la méthode d'estimation de la température du disque de frein de l'invention fournit à chaque instant une température de disque fiable. En effet, la courbe de température du disque estimée par la méthode de l'invention présente un écart de température observé par rapport aux températures mesurées par les capteurs toujours inférieur à 50°C pour une utilisation sportive.

Cet écart de température est légèrement plus important sur la phase de refroidissement pur (quand le véhicule est à l'arrêt) du fait que la température du disque peut être fortement impactée par des facteurs relatifs à l'environnement non pris en compte par la méthode de l'invention (zone ombragée, présence de vent notamment).

La méthode d'estimation de la température d'un disque de frein selon l'invention peut être utilisée lors d'une phase amont de prédimensionnement des organes de frein afin qu'ils correspondent aux caractéristiques et performances recherchées pour le véhicule. Avec la description de l'invention, on comprend que cette méthode permet, sur la base de paramètres physiques disponibles et facilement accessibles aux équipes de conception, d'obtenir une estimation précise de la température d'un disque selon différentes configurations d'utilisation. La méthode d'estimation de la température du disque de frein constitue un outil d'aide à la prise de décision en permettant de comparer deux solutions différentes d'organe de frein.

L'invention porte aussi sur un véhicule comprenant N roues et N disques de frein, N étant un entier naturel supérieur ou égal à 1, chacun des N disques de frein étant associé à une des N roues, et un processeur configuré pour mettre en œuvre la méthode d'estimation de la température d'au moins un des N disques telle que décrite précédemment.

L'invention porte aussi sur une méthode, mise en œuvre par ordinateur, de contrôle préventif d'un véhicule comprenant une étape 50 de fourniture d'une température maximale de consigne Tmax d'un des disques de frein. Ensuite la méthode de contrôle comprend l'estimation de la température de ce disque de frein à l'aide de la méthode d'estimation de la température du disque de frein décrite précédemment. Enfin, si la température du disque calculée à l'instant t est supérieure à la température maximale de consigne Tmax, la méthode de contrôle comprend une étape 400 de réalisation d'une action préventive.

L'action préventive peut être par exemple le pilotage de l'ouverture d'un déflecteur pour le disque de frein. Cette action permet d'améliorer le refroidissement du disque de frein en favorisant le passage d'air vers le disque de frein. Cette action préventive étant opérée seulement quand la température maximale de consigne est atteinte, l'ouverture du déflecteur est réalisée au juste nécessaire pour ne pas dégrader l'aérodynamisme du véhicule.

L'action préventive peut être la désactivation d'une fonction auxiliaire, telle que le programme de stabilité électronique (ESP). L'ESP corrige la trajectoire du véhicule en influant notamment sur le freinage. Si la température maximale de consigne pour un disque de frein est atteinte, il est souhaitable de ne plus le solliciter à cet instant pour un freinage additionnel. La désactivation ponctuelle de l'ESP garantit cette mesure préventive.

L'action préventive peut être l'envoi d'un signal au conducteur du véhicule, afin de lui indiquer une surutilisation du frein et l'informer sur un risque potentiel de défaillance du freinage et/ou une usure prématurée du disque de frein.

L'action préventive peut aussi être l'enregistrement de la température du disque et de l'instant t auquel la température maximale de consigne a été atteinte sur un support d'enregistrement du véhicule. La mise à disposition de ces données permet d'analyser a posteriori le cycle de vie du disque de frein.

L'invention couvre aussi un programme d'ordinateur comportant des instructions pour l'exécution de la méthode d'estimation de la température d'un disque de frein et/ou de la méthode de contrôle préventif d'un véhicule telles que décrites précédemment, lorsque le programme est exécuté par un processeur.

L'invention porte également sur un support d'enregistrement lisible par un processeur sur lequel est enregistré un programme comportant des instructions pour l'exécution de la méthode d'estimation de la température d'un disque de frein et/ou de la méthode de contrôle préventif d'un véhicule, lorsque le programme est exécuté par un processeur.

Les modes de réalisation de l'invention sont adaptés pour une mise en œuvre dans tout type de véhicule, qu'il soit à chaîne de traction thermique, électrique ou hybride.

Une personne du métier comprend que le système ou les sous-systèmes selon les modes de réalisation de l'invention peuvent être mis en œuvre de diverses manières sous la forme de matériel, de logiciel ou d'une combinaison de matériel et de logiciel, en particulier sous la forme de code de programme pouvant être distribué sous la forme d'un produit de programme, sous diverses formes. En particulier, le code de programme peut être distribué à l'aide de supports lisibles par ordinateur, qui peuvent comprendre des supports de stockage lisibles par ordinateur et des supports de communication. Les procédés ou méthodes décrits dans la présente description peuvent notamment être mis en œuvre sous la forme d'instructions de programme informatique pouvant être exécutées par un ou plusieurs processeurs dans un dispositif de traitement informatique. Ces instructions de programme informatique peuvent également être stockées dans un support lisible par ordinateur.

Bien sûr, l'invention n'est pas limitée aux exemples qui viennent d'être décrits et de nombreux aménagements peuvent être apportés à ces exemples sans sortir du cadre de l'invention. Notamment les caractéristiques de différentes variantes de réalisation de l'invention peuvent être combinées pour réaliser l'invention, dans la mesure où ces variantes ne sont pas incompatibles entre elles.

**Revendications**

1. Méthode, mise en œuvre par ordinateur, d'estimation de la température (Ti(t)), à un instant t, d'un disque de frein (Di) embarqué dans un véhicule et associé à une roue, le véhicule comprenant N roues et N disques de frein, N étant un entier naturel supérieur ou égal à 1, ladite méthode comprenant les étapes suivantes :

   - Calcul (étape 100) d'un échauffement théorique ($\Delta T_{heat\_i}$) du disque (Di) à l'instant t ;
   - Calcul (étape 200) du refroidissement ($\Delta T_{cool\_i}$) du disque (Di) à l'instant t ;
   - Calcul (étape 300) de la température (Ti(t)) du disque (Di) à l'instant t.

2. Méthode selon la revendication 1, dans lequel l'étape (100) de calcul d'un échauffement théorique ($\Delta T_{heat\_i}$) du disque (Di) comprend les sous-étapes suivantes :

   - Calcul (sous-étape 110) de l'énergie cinétique ($\Delta Ec$) à dissiper à l'instant t sur les N disques de frein ;
   - Calcul (sous-étape 120) de l'énergie cinétique ($\Delta Eci$) à dissiper pour chacun des N disques de frein à l'instant t ;
   - Calcul (sous-étape 130) de l'élévation de température ($\Delta T_{heat\_i}$) pour chacun des N disques de frein à l'instant t.

3. Méthode selon la revendication 2, dans laquelle la sous-étape (120) de calcul de l'énergie cinétique ($\Delta Eci$) à dissiper pour chacun des N disques de frein à l'instant t est réalisée en fonction de la répartition des puissances de freinage sur ledit disque de frein à l'instant t.

4. Méthode selon la revendication 2 ou 3, dans laquelle la sous-étape (130) de calcul de l'élévation de température ($\Delta T_{heat\_i}$) pour chacun des N disques de frein à l'instant t est réalisée au moyen d'une variable ($a_{th}$) représentative du freinage opéré par le disque de frein.

5. Méthode selon l'une quelconque des revendications 1 à 4, dans laquelle l'étape (200) de calcul du refroidissement du disque (Di) à l'instant t comprend au préalable une étape (190) de détermination d'une constante de refroidissement ($\tau$) propre au véhicule et fonction de la vitesse du véhicule à l'instant t.

6. Véhicule comprenant N roues et N disques de frein, N étant un entier naturel supérieur ou égal à 1, chacun des N disques de frein étant associé à une des N roues, et un processeur configuré pour mettre en œuvre la méthode selon l'une quelconque des revendications 1 à 5.

7. Méthode, mise en œuvre par ordinateur, de contrôle préventif d'un véhicule selon la revendication 6 comprenant les étapes suivantes :

- Fourniture (étape 50) d'une température maximale de consigne d'un des N disques de frein ;
- Estimation de la température dudit disque de frein par mise en œuvre de la méthode d'estimation de la température selon l'une quelconque des revendications 1 à 5 ;
- Si la température du disque (Di) calculée à l'instant t est supérieure à la température maximale de consigne : réalisation d'une action préventive (étape 400).

8. Méthode selon la revendication 7, dans laquelle l'action préventive (400) est une parmi :

- Pilotage de l'ouverture d'un déflecteur pour le disque de frein ;
- Désactivation d'une fonction auxiliaire, notamment le programme de stabilité électronique ;
- Envoi d'un signal au conducteur du véhicule ;
- Enregistrement de la température du disque et de l'instant t auquel la température maximale de consigne a été atteinte.

9. Programme d'ordinateur comportant des instructions pour l'exécution de la méthode selon l'une quelconque des revendications 1 à 5 et/ou de la méthode selon la revendication 7 ou 8, lorsque le programme est exécuté par un processeur.

10. Support d'enregistrement lisible par un processeur sur lequel est enregistré un programme comportant des instructions pour l'exécution de la méthode selon l'une quelconque des revendications 1 à 5 et/ou de la méthode selon la revendication 7 ou 8, lorsque le programme est exécuté par un processeur.

FIGURE 1

FIGURE 2

## FIGURE 3

## FIGURE 4

Europäisches
Patentamt

European
Patent Office

Office européen
des brevets

## RAPPORT DE RECHERCHE EUROPEENNE

**Numéro de la demande**

EP 25 20 0662

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 083 360 B1 (KNORR BREMSE SYSTEME [DE]) 18 octobre 2006 (2006-10-18) * alinéa [0001] - alinéa [0071]; figures 1,3,5 * | 1-10 | INV. B60T17/22 ADD. F16D66/00 |
| | ----- | | |
| X | DE 42 35 364 A1 (KNORR BREMSE AG [DE]) 21 avril 1994 (1994-04-21) | 1,4,6, 8-10 | |
| A | * colonne 1 - colonne 8; figures 1-3 * | 2,3,5,7 | |
| | ----- | | |
| X | WO 92/00212 A1 (BOSCH GMBH ROBERT [DE]) 9 janvier 1992 (1992-01-09) | 1,5,6, 8-10 | |
| A | * page 1 - page 9; figures 1,2 * | 2-4,7 | |
| | ----- | | |
| A | CN 117 002 464 A (SHANDONG ACADEMY OF SCIENCES INST AUTOMATION) 7 novembre 2023 (2023-11-07) * page 1 - page 7; figure 1 * | 1-10 | |
| | ----- | | |

**DOMAINES TECHNIQUES RECHERCHES (IPC)**

B60T
F16D

Le présent rapport a été établi pour toutes les revendications

| Lieu de la recherche | Date d'achèvement de la recherche | Examinateur |
|---|---|---|
| Munich | 12 janvier 2026 | Kyriakides, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 0662

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-01-2026

| Document brevet cité au rapport de recherche | | Date de publication | Membre(s) de la famille de brevet(s) | | Date de publication |
|---|---|---|---|---|---|
| EP 1083360 | B1 | 18-10-2006 | AT | E343077 T1 | 15-11-2006 |
| | | | DE | 19943352 A1 | 05-04-2001 |
| | | | EP | 1083360 A2 | 14-03-2001 |
| DE 4235364 | A1 | 21-04-1994 | DE | 4235364 A1 | 21-04-1994 |
| | | | EP | 0594113 A1 | 27-04-1994 |
| WO 9200212 | A1 | 09-01-1992 | EP | 0489887 A1 | 17-06-1992 |
| | | | JP | 3437569 B2 | 18-08-2003 |
| | | | JP | H05509270 A | 22-12-1993 |
| | | | WO | 9200212 A1 | 09-01-1992 |
| CN 117002464 | A | 07-11-2023 | AUCUN | | |

EPO FORM P0460